# EUROPÄISCHE PATENTSCHRIFT

(11) **EP 1 097 428 B1**
(45) Veröffentlichungstag und Bekanntmachung des Hinweises auf die Patenterteilung: **19.06.2002**
(21) Anmeldenummer: 99947206.1
(22) Anmeldetag: 10.07.1999
(51) Int. Cl.: G06F 17/60, G06F 11/32, H04L 12/26

(54) **SYSTEM UND VERFAHREN ZUM PRÜFEN VON NETZWERK-ANWENDUNGEN**
SYSTEM AND METHOD FOR AUDITING NETWORK APPLICATIONS
SYSTEME ET PROCEDE DE VERIFICATION D'UTILISATIONS D'UN RESEAU

(30) Priorität: 10.07.1998 US 113376
(43) Veröffentlichungstag der Anmeldung: 09.05.2001
(73) Patentinhaber: SAP Aktiengesellschaft, 69190 Walldorf (DE)
(72) Erfinder: WENIG, Robert, Mill Valley, CA 94941 (US); TSYGANSKIY, Igor, Los Gatos, Ca 95032 (US); LANDRY, Kenneth, Apex, NC 27502 (US)
(74) Vertreter: Jany, Peter, Dr.
(86) Internationale Anmeldenummer: DE9902170
(87) Internationale Veröffentlichungsnummer: WO0003323

(56) Entgegenhaltungen:
- EP-A- 0 326 283
- WO-A-98/26571
- US-A- 5 577 254
- SMITH J B, SMITH D K, KUPSTAS E: "Automated Protocol Analysis" HUMAN-COMPUTER INTERACTIONS, Bd. 8, Nr. 2, 1993, Seiten 101-146, XP002129898 USA

## Beschreibung

Die vorliegende Erfindung bezieht sich auf ein System und auf ein Verfahren zum Prüfen (englisch: auditing) von Netzwerk-Anwendungen. Insbesondere bezieht sich die vorliegende Erfindung auf ein System und ein Verfahren zum visuellen Wiedererzeugen (englisch: recreate) einer Benutzersitzung für das Analysieren verschiedener Aspekte der Netzwerk-Anwendung.

In einer Netzwerk-Anwendung, die auch als Client/Server-Anwendung bezeichnet wird, fordert ein Client von einem Server Information an. Der Server liefert als Antwort (englisch: response) auf jede Anforderung (englisch: request) Information an den Client. Ein typischer Server kann mehreren hundert Clienten gleichzeitig antworten, während der Client auf mehrere Server intermittierend und über eine sehr kurze Zeitspanne hinweg zugreifen kann. Wegen der sehr dynamischen Natur solcher Anwendungen sind Probleme, die mit der Anwendung verbunden sind, schwierig zu isolieren, zu reproduzieren und/oder zu diagnostizieren. Desweiteren ist es schwierig, solche Probleme entweder auf den Server oder den Client zurückzuführen.

Ein anderes Problem, das mit Netzwerk-Anwendungen verknüpft ist, insbesondere mit solchen, die elektronischen Handelsverkehr ("E-commerce") abwickeln, besteht darin, daß das genaue Verhalten des Käufers während des Geschäftsabschlusses schwierig zu ermitteln und noch schwieriger auszuwerten oder zu verstehen ist. Beispielsweise kann es sein, daß der Entwickler einer Website verstehen möchte, wie ein bestimmter Käufer, der eine E-commerce-Anwendung benutzt, durch die Website navigiert, um einen Artikel zu erwerben. Angesichts der Natur konventioneller Netzwerk-Anwendungen ist ein solches Verständnis schwierig zu gewinnen.

Aus dem Patentschrift US-A-5,577,254 ist ein Verfahren zur Überwachung und zur Analyse einer Benutzensitzung zwischen einem Host und einem oder mehreren Terminals bekannt.

Es bestehen noch weitere Probleme bei Netzwerk-Anwendungen, von denen einige im folgenden detaillierter diskutiert werden. Diese sind teilweise darauf zurückzuführen, daß in einem Netz eine riesige Informationsmenge zur Verfügung steht, z.B. im Handelsverkehr, und daß verschiedene Datenformate und Anwendungssprachen Verwendung finden. Es besteht ein Bedarf für ein System und ein Verfahren zum Prüfen von Netzwerk-Anwendungen, das die hier beschriebenen Probleme löst.

Folglich richtet sich die vorliegende Erfindung auf ein System und ein Verfahren zum Prüfen von Netzwerk-Anwendungen. Erfindungsgemäß wird ein Verfahren mit den Merkmalen des Anspruchs 1 und eine Vorrichtung mit den Merkmalen des Anspruchs 24 vorgeschlagen. In einer besonders vorteilhaften Ausführungsform erfaßt die vorliegende Erfindung Anforderungen und/oder Antworten, die zwischen einem Client und einem Server während einer bestimmten Benutzersitzung einer Netzwerk-Anwendung hin- und hergesendet werden. Die vorliegende Erfindung speichert die Anforderungen und die Antworten in einem Prüfspeicher. Anschließend gewinnt die vorliegende Erfindung die Anforderungen und die Antworten aus dem Prüfspeicher zurück, derungen und die Antworten aus dem Prüfspeicher zurück, um die Benutzersitzung visuell wiederzuerzeugen.

Eine Benutzersitzung in diesem Sinne ist nicht immer die gesamte Aktivität zwischen einem logon und einem logoff, sondern kann auch eine Bildschirmanzeige sein, die sich abhängig von der Aktivität des Client bzw. Benutzers und abhängig von der aktuellen Anforderung ändert. Eine solche Anforderung kann auch ein Ereignis sein, beispielsweise die Bewegung eines Cursors durch den Benutzer. Überstreicht der Cursor dabei bestimmte Bildschirmfelder, z.B. ein "Banner", so wird ein Ereignis ausgelöst.

Vorzugsweise werden nur visuelle Informationen gespeichert. Auf Basis dieser Informationen wird die spätere Analyse der Sitzung durchgeführt. Die Speicherung von visuellen Informationen bezieht sich z.B. darauf, welche Bildschirmbereiche der User mit dem Maus-Cursor überstrichen hat. Es wird die Maus-Cursor-Bewegung des Users analysiert, wenn z.B. bestimmte Bildschirminhalte vom Maus-Cursor berührt werden. Es ist nicht erforderlich, daß der User einen Mausklick durchführt. Aufgabe der Erfindung ist in diesem Fall festzustellen, für welche Bildschirminhalte sich der Benutzer interessiert, ohne daß der Benutzer bestimmte auf dem Bildschirm angebotene Links oder Aktionen aktiviert. Es werden vorzugsweise nur solche Daten gespeichert, mit denen die Mausbewegung des Benutzers nachvollzogen werden kann und mit denen die von dem Maus-Cursor überstrichenen Bildschirmfelder in der späteren oder durch die spätere Analyse visuell wiedergegeben werden können.

Das Erfassen im Sinne der Erfindung ist ein zwei Stufen umfassender Prozeß. Der erste Schritt beinhaltet das Kopieren bzw. Speichern der Daten. Der zweite Schritt beinhaltet ein Filtern der Daten. Das Speichern ist also ein Verfahrensschritt des Erfassens. Das Erfassen der Daten findet vor ihrer Evaluierung statt.

Einer der Vorteile der vorliegenden Erfindung besteht darin, daß ein Analyst in der Lage ist, eine bestimmte Benutzersitzung in dem Prüfspeicher aufzufinden und eine bestimmte Benutzersitzung Schritt für Schritt durchzugehen, wobei er die Benutzersitzung so betrachtet, wie der Client bzw. der Benutzer des Client die Benutzersitzung betrachtet hat. Dies versetzt den Analyst in die Lage, die Reihenfolge von Ereignissen, die während einer bestimmten Benutzersitzung eingetreten sind, exakt so zu verfolgen und zu verstehen, wie sie stattgefunden haben.

Eine andere Besonderheit der vorliegenden Erfindung besteht darin, daß der Analyst die genaue Reihenfolge von Ereignissen ermitteln kann, die vor dem Auftreten eines Fehlers in der Netzwerk-Anwendung stattgefunden haben. Die vorliegende Erfindung speichert außerdem Information, die den Zustand der Client/Server-Umgebung während der Benutzersitzung beschreibt, so daß es dem Analyst möglich sein kann, bestimmte Fehler auf die Auslastung oder den Datenverkehr auf dem Server oder der Datenübertragungsverbindung zurückzuführen.

Ein weiterer Vorteil der vorliegenden Erfindung besteht darin, daß der Analyst Daten betrachten kann, die zu Sitzungen von mehreren Benutzern gehören, um zu analysieren, wie verschiedene Benutzer eine bestimmte Website durchlaufen haben. Eine solche Analyse ist nützlich, um festzustellen, wie bestimmte Websites zum Erzielen eines bestimmten Ergebnisses verbessert werden können.

Eine weitere Besonderheit der vorliegenden Erfindung besteht darin, daß eine OLAP-Analyse durchgeführt werden kann, z.B. um Kunden, die routinemäßig kaufen, bessere Antwortzeiten bereitzustellen, indem sie an einen schnelleren Anwendungsserver weitergegeben werden. Desweiteren könnte solchen Kunden, die routinemäßig Käufe tätigen, ein direkter Pfad zu einer bestimmten Stelle in der Website angeboten werden, wodurch der Pfad, der für andere Kunden vorgesehen ist, umgangen wird. Darüber hinaus kann der Analyst den Nutzen von Werbung auf der Website untersuchen, indem er die Anzahl der vor und nach einer solchen Werbung getätigten Käufe betrachtet.

Weitere Eigenschaften und Vorteile der vorliegenden Erfindung werden in der folgenden Beschreibung erläutert, und zum Teil sind sie aus der Beschreibung offensichtlich oder zeigen sich bei der Ausübung der Erfindung. Die Ziele und Vorteile der Erfindung werden durch das Verfahren erreicht, das besonders in der Beschreibung und in den daraus abgeleiteten Ansprüchen sowie in den beigefügten Zeichnungen dargestellt ist.

Die vorangegangene allgemeine Beschreibung und die folgende detaillierte Beschreibung sind beispielhaft und erklärend und dazu gedacht, als weitere Erklärung der beanspruchten Erfindung zu dienen.

Die beigefügten Zeichnungen, die ein weitergehendes Verständnis der Erfindung liefern sollen und die in diese Anmeldung eingefügt sind und ein Teil von ihr bilden, veranschaulichen Ausführungsformen der Erfindung, die zusammen mit der Beschreibung dazu dienen, die Prinzipien der Erfindung zu erklären.
- Fig. 1: veranschaulicht eine Ausführungsform der vorliegenden Erfindung, die Sitzungsdaten in einer Client/Server-Umgebung erfaßt.
- Fig. 2: veranschaulicht eine Ausführungsform der vorliegenden Erfindung, die erfaßte Sitzungsdaten in einer Prüf-Umgebung analysiert.
- Fig. 3: ist ein Flußdiagramm, das die Arbeitsweise einer Ausführungsform der vorliegenden Erfindung beim Erfassen von Sitzungsdaten veranschaulicht.
- Fig. 4: ist ein Flußdiagramm, das die Arbeitsweise einer Ausführungsform der vorliegenden Erfindung beim visuellen Wiedererzeugen einer Benutzersitzung veranschaulicht.
- Fig. 5: ist ein Flußdiagramm, das die Arbeitsweise einer bevorzugten Ausführungsform der vorliegenden Erfindung bei der Ausführung des Schritts des Wiedererzeugens und des visuellen Darstellens des dynamisch erzeugten Bildschirminhaltes veranschaulicht.
- Fig. 6: veranschaulicht eine Analysiereinrichtung gemäß einer bevorzugten Ausführungsform der vorliegenden Erfindung detaillierter.
- Fig. 7: veranschaulicht ein Analysemodul gemäß einer bevorzugten Ausführungsform der vorliegenden Erfindung detaillierter.
- Fig. 8: ist ein Flußdiagramm, das den Schritt des Speicherns von Daten in dem Prüfspeicher gemäß einer Ausführungsform der vorliegenden Erfindung veranschaulicht.
- Fig. 9: veranschaulicht gemäß einer Ausführungsform der vorliegenden Erfindung eine Sternstruktur zum Speichern von OLAP-Daten für eine Umgebung auf Internet-Basis.
- Fig. 10: veranschaulicht gemäß einer Ausführungsform der vorliegenden Erfindung eine Sternstruktur zum Speichern von OLAP-Daten für eine SAP R/3-Umgebung.
- Fig. 11: veranschaulicht die Datenstruktur einer Darstellungs-Tabelle für eine Umgebung auf Internet-Basis gemäß einer Ausführungsform der vorliegenden Erfindung.
- Fig. 12: veranschaulicht die Datenstruktur einer Darstellungs-Tabelle für eine SAP R/3-Umgebung gemäß einer Ausführungsform der vorliegenden Erfindung.
- Fig. 13: veranschaulicht die Datenstruktur eines Dimensions-Pufferspeichers gemäß einer Ausführungsform der vorliegenden Erfindung.

Nun wird detailliert auf die bevorzugten Ausführungsformen der vorliegenden Erfindung, die in Beispielen in den beigefügten Zeichnungen veranschaulicht sind, Bezug genommen.

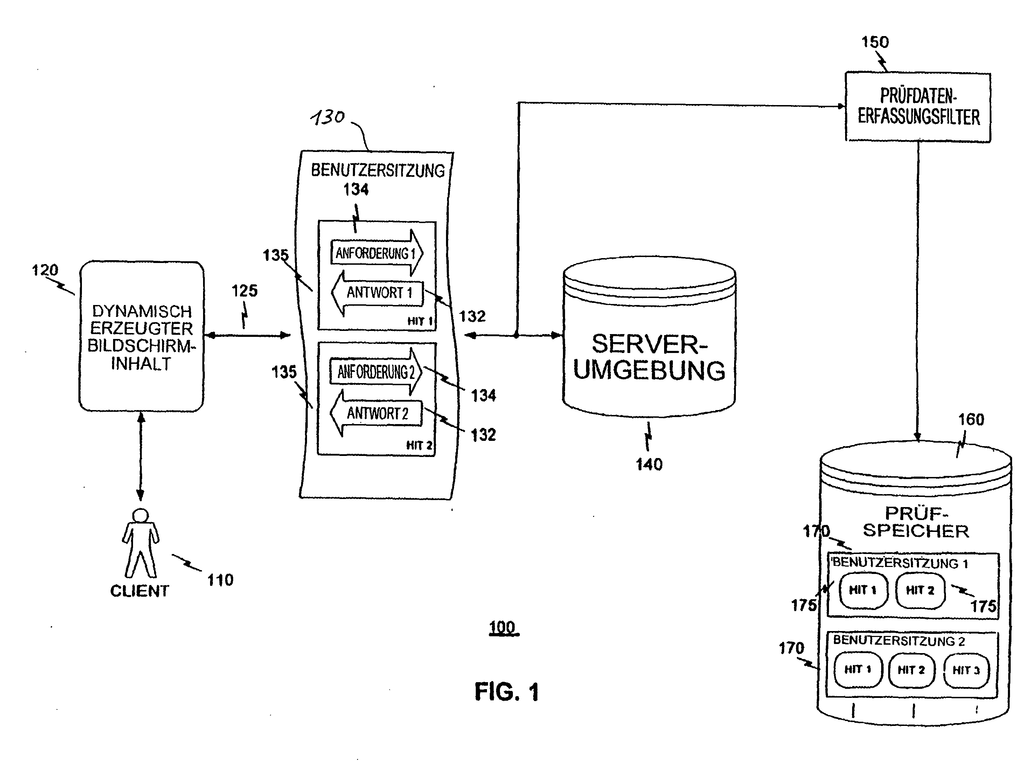

In einer Client/Server-Umgebung 100, wie sie in Fig. 1 dargestellt ist, kommuniziert ein Client 110 mit einer Server-Umgebung 140 über eine Datenübertragungsverbindung 125. Die Server-Umgebung 140 kann selbstverständlich einen einzigen Netz-Server oder mehrere Server, die in Verbindung miteinander laufen, umfassen.

Ein bestimmter Satz von aufeinander bezogenen Mitteilungen zwischen dem Client 110 und der Server-Umgebung 140 wird als Benutzersitzung 130 bezeichnet. Die Benutzersitzung 130 beinhaltet eine Folge von Anforderungen 134 des Client 110 an die Server-Umgebung 140 und eine Folge von Antworten 132 der Server-Umgebung 140 an den Client 110 als Reaktionen auf die Anforderungen 134. Eine bestimmte Anforderung 134 und die zu ihr gehörende Antwort 132 werden hier als ein Hit 135 oder als Anforderung/Antwort-Paar bezeichnet. Während einer Benutzersitzung 130 kann der Client 110 in bekannter Weise auf verschiedene Arten auf die Server-Umgebung 140 zugreifen.

Der Client 110 greift auf die Server-Umgebung 140 mittels eines dynamisch erzeugten Bildschirminhaltes 120 zu, der dem Client 110 bzw. einem nicht dargestellten Benutzer eines Client 110 für eine bestimmte Netzwerk-Anwendung Information anzeigt, die von der Server-Umgebung 140 stammt. Im folgenden wird die Bezeichnung Client 110 stellvertretend für einen Client oder einen Benutzer eines Client benutzt. Auf der Basis von Anforderungen 134 und Antworten 132 liefert die Server-Umgebung 140 Information, um den dynamisch erzeugten Bildschirminhalt 120 zu aktualisieren.

Gemäß einer Ausführungsform der vorliegenden Erfindung wird der dynamisch erzeugte Bildschirminhalt 120 auf der Basis von Information, die in der Antwort 132 der Server-Umgebung 140 enthalten ist, durch eine (nicht gezeigte) Workstation des Client 110 dynamisch erzeugt. In einer Ausführungsform der vorliegenden Erfindung wird der dynamisch erzeugte Bildschirminhalt 120 von der Workstation auf Basis einer Antwort 132 erzeugt, die eine Auszeichnungssprache (englisch: "mark up language") wie z.B. HTML (Hypertext Markup Language), XML (Xtended Markup Language), SGML (Standard Generalized Markup Language) und so weiter benutzt, wie sie in verschiedenen Client/Server-Umgebungen 100 verwendet wird.

In einer alternativen Ausführungsform der vorliegenden Erfindung wird der dynamisch erzeugte Bildschirminhalt 120 von einer Workstation des Client 110 auf Basis einer Antwort 132 erzeugt, die Information enthält, die kompatibel zu Formaten ist, die in einer dedizierten on-line-Umgebung oder Netzwerk-, z.B. Internet- oder Intranet-Umgebung oder Umgebung eines Systems für Personaleinsatzmanagement, Finanz-, Logistik-, Geschäftsablauf-, Personal-, Organisations-, Buchungs-, Zeitmanagement- oder Personalentwicklungssystem, insbesondere einer SAP R/3-Umgebung verwendet werden.

Die folgende Diskussion erfolgt auf der Grundlage einer Client/Server-Umgebung 100, die in einer Umgebung auf Internet-Basis oder auf Web-Basis arbeitet. Selbstverständlich bezieht sich die vorliegende Erfindung jedoch auch auf ein System, in dem der Client 110 mit der Server-Umgebung 140 direkt festverdrahtet ist, wie es z.B. in der SAP R/3-Umgebung der Fall ist. Für einen Fachmann ist es klar, in welcher Weise die folgende Diskussion für solche festverdrahteten oder "dedizierten" Systeme gilt.

Gemäß einer vorteilhaften Ausführungsform der vorliegenden Erfindung überwacht ein Prüfdaten-Erfassungsfilter 150 die Datenübertragungsverbindung 125, um Mitteilungen (d.h. Anforderungen 134 und Antworten 132) zwischen dem Client 110 und der Server-Umgebung 140 zu erfassen (englisch: capture). Insbesondere erfaßt der Prüfdaten-Erfassungsfilter 150 die Anforderung 134 des Client 110 an die Server-Umgebung 140 und die Antwort 132 der Server-Umgebung 140 an den Client 110. Der Prüfdaten-Erfassungsfilter 150 nimmt die Daten und speichert sie ab. Das Filter ist beliebig. Es werden vorzugsweise nur die Daten abgespeichert, die notwendig sind, um die Benutzersitzung visuell wiedergeben zu können.

In einer Ausführungsform der vorliegenden Erfindung erfaßt der Prüfdaten-Erfassungsfilter 150 die Anforderung 134 von der Datenübertragungsverbindung 125, nachdem die Server-Umgebung 140 die Anforderung 134 empfangen hat, aber bevor die Server-Umgebung 140 die Anforderung 134 verarbeitet hat. In dieser Ausführungsform der vorliegenden Erfindung erfaßt der Prüfdaten-Erfassungsfilter 150 die Antwort 132, nachdem die Server-Umgebung 140 die Anforderung 134 verarbeitet und die Antwort 132 ermittelt hat, aber bevor die Server-Umgebung 140 die Antwort 132 absendet. Selbstverständlich sollte die Erfassungsfunktion eines bevorzugten Prüfdaten-Erfassungsfilters 150 die Kommunikation zwischem dem Client 110 und der Server-Umgebung 140 nicht stören oder unterbrechen.

In der gerade beschriebenen Ausführungsform der vorliegenden Erfindung weist die Server-Umgebung 140 die Modifikationen auf, die notwendig sind, um dem Prüfdaten-Erfassungsfilter 150 den Zugriff auf die Anforderungen 134 und die Antworten 132 zu ermöglichen. Mit anderen Worten: die Server-Umgebung 140 stellt in bekannter Weise die Hooks für die Sitzungsdaten für den Prüfdaten-Erfassungsfilter 150 zur Verfügung. In dieser Ausführungsform erfaßt der Prüfdaten-Erfassungsfilter 150 die Anforderungen 134 und die Antworten 132 im Zusammenwirken mit der Server-Umgebung 140 und möglicherweise mit Hilfe ihrer aktiven Teilnahme.

In einer alternativen Ausführungsform der vorliegenden Erfindung benötigt der Prüfdaten-Erfassungsfilter 150 die oben diskutierten Modifikationen der Server-Umgebung 140 nicht. In dieser alternativen Ausführungsform der vorliegenden Erfindung erfaßt der Prüfdaten-Erfassungsfilter 150 die Anforderungen 134 und die Antworten 132 direkt von der Datenübertragungsverbindung 125, und die Server-Umgebung 140 arbeitet ohne bezug auf die Anwesenheit des Prüfdaten-Erfassungsfilters 150.

Der Prüfdaten-Erfassungsfilter 150 speichert die erfaßte Anforderung 134 und die erfaßte Antwort 132 in einem Prüfspeicher 160. In einer bevorzugten Ausführungsform der vorliegenden Erfindung werden eine erfaßte Anforderung 134 und eine erfaßte Antwort 132 als ein Hit 135 gespeichert. Der Prüfspeicher 160 weist selbstverständlich eine Speichervorrichtung auf, beispielsweise ein Plattenlaufwerk, ein RAM, eine Datenbankeinrichtung oder eine andere derartige Speichereinrichtung. Die Speicherung von Daten in einem Datenbankformat ist im Sinne der Erfindung vorteilhaft.

In einigen bevorzugten Ausführungsformen der vorliegenden Erfindung speichert der Prüfspeicher 160 alle Hits 135 einer bestimmten Benutzersitzung 130 als gespeicherte Hits 175 einer gespeicherten Benutzersitzung 170. Mit anderen Worten: bei diesen Ausführungsformen der vorliegenden Erfindung werden die Folgen von erfaßten Anforderungen 134 und erfaßten Antworten 132, die eine bestimmte Benutzersitzung 130 beinhaltet, insgesamt als gespeicherte Benutzersitzung 170 abgespeichert.

In einer Ausführungsform der vorliegenden Erfindung wird die Benutzersitzung 130 über ein Internet geführt. In diesem Fall befinden sich der Client 110 und die Server-Umgebung 140 nach jeder Übertragung (d.h. nach jeder Anforderung 134 des Client 110 an die Server-Umgebung 140 und nach jeder Antwort 132 der Server-Umgebung 140 an den Client 110) nicht in aktiver Verbindung (d.h. die Verbindung zwischen Client 110 und Server-Umgebung 140 ist effektiv getrennt). In einer solchen Anwendung wird üblicherweise eine eindeutige Identifikation der Sitzung (hier auch als Status-Identifikation bezeichnet) benutzt, um einen bestimmten Client 110 jedesmal zu identifizieren, wenn er auf die Server-Umgebung 140 zugreift. Die Identifikation der Sitzung wird mit jeder Anforderung 134 gesendet, um den Benutzerkontext eindeutig zu bestimmen. Dadurch, daß die Server-Umgebung 140 die Identifikation der Sitzung dazu benutzt, jede Anforderung 134 einem bestimmten Client 110 zuzuordnen, ist die Server-Umgebung 140 in der Lage, den Client 110 über das Internet so zu behandeln, als ob der Client 110 ständig mit der Server-Umgebung 140 verbunden wäre.

In einer zweiten Ausführungsform der vorliegenden Erfindung sind der Client 110 und die Server-Umgebung 140 ständig über eine dedizierte Datenübertragungsverbindung 125 verbunden. In dieser Ausführungsform der vorliegenden Erfindung ist nicht für jede Anforderung 134 eine Identifikation der Sitzung notwendig; vielmehr erfolgt die Identifikation der Sitzung implizit bei jeder Übertragung zwischen dem Client 110 und der Server-Umgebung 140, da die Verbindung durch die dedizierte Datenübertragungsverbindung 125 erfolgt.

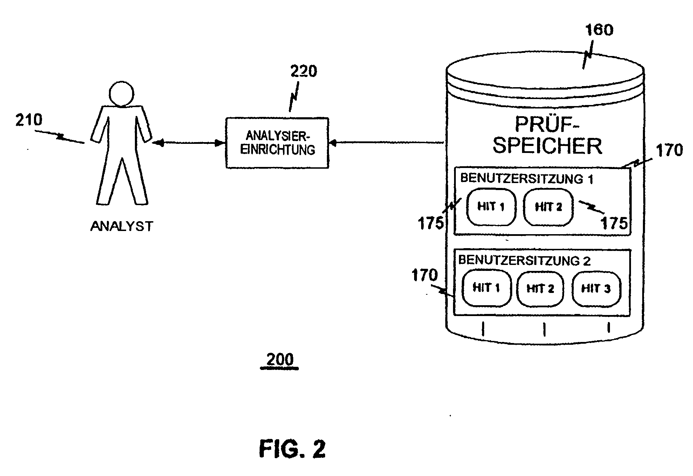

Wie oben diskutiert wurde, wird eine Folge von Anforderungen 134 und Antworten 132 einer Benutzersitzung 130 zwischen dem Client 110 und der Server-Umgebung 140 in dem Prüfspeicher 160 als gespeicherte Hits 175 der gespeicherten Benutzersitzung 170 gespeichert. Wie unter Bezug auf Fig. 2 diskutiert wird, ermöglicht eine Analysiereinrichtung 220 es einem Analyst 210, die Benutzersitzung 170 zu analysieren.

Der Analyst 210 kann z.B. die Benutzersitzung 170 auswerten, um festzustellen, wie sich der Client 110 zum Erreichen eines bestimmten Ergebnisses durch eine bestimmte Netzwerk-Anwendung bewegt. Eine solche Auswertung ist z.B. bei kommerziellen oder bei E-commerce-Internetanwendungen nützlich. Bei derartigen Anwendungen sind Anwendungsentwickler daran interessiert, zu verstehen, wie ein Client 110 eine bestimmte Anwendung durchläuft, um zu einem bestimmten Ergebnis, wie z.B. der Tätigung eines Kaufs, zu gelangen. Man erkennt, daß die vorliegende Erfindung dem Analysten 210 erlaubt, die bestimmte Anwendung für verschiedene Clienten 110 zu unterschiedlichen Zeiten, usw. auszuwerten.

In einem anderen Beispiel kann der Analyst 210 die Benutzersitzung 170 auswerten, um Fehler zu isolieren, die während der Benutzersitzung 130 aufgetreten sind. In diesem Beispiel kann der Analyst 210 bei dem Versuch, ein bei einer bestimmten Netzwerk-Anwendung aufgetretenes Problem, zu identifizieren und zu isolieren, die gesamte Benutzersitzung 130 wiedererzeugen bzw. nachvollziehen.

Wie in Fig. 2 gezeigt ist, benutzt der Analyst 210 die Analysiereinrichtung 220, um auf den Prüfspeicher 160 zuzugreifen. Insbesondere ist der Analyst 210 in der Lage, auf eine bestimmte Benutzersitzung 170 zuzugreifen und sie visuell wiederzuerzeugen. Mit anderen Worten: der Analyst 210 ist in der Lage, die bestimmte Benutzersitzung 170 Schritt für Schritt zu durchlaufen und jede Anforderung 134 und jede Antwort 132, so wie sie während der Benutzersitzung 170 aufgetreten sind, individuell auszuwerten.

In einer bevorzugten Ausführungsform der vorliegenden Erfindung reproduziert die Analysiereinrichtung 220 die Benutzersitzung 170, indem sie die verschiedenen Bildschirminhalte 120 erzeugt, die dem Client 110 während der Benutzersitzung 130 von der Server-Umgebung 140 präsentiert wurden. Auf diese Weise ist der Analyst 210 in der Lage, sich die gleichen Bildschirminhalte 120 anzuschauen, die der Client 110 während der Benutzersitzung 130 betrachtet hat. Der Analyst 210 ist außerdem in der Lage, jede Anforderung, die durch den Client 110 erfolgt ist, und jede darauffolgende Antwort 132 der Server-Umgebung 140 auszuwerten.

Es ist klar, daß der Analyst 210 die Benutzersitzung 130 off-line, d.h. nachdem die Benutzersitzung 170 abgeschlossen ist, oder in nahezu Echtzeit, d.h. während die Benutzersitzung 170 stattfindet, auswerten kann. In dieser letztgenannten Ausführungsform kann die Analysiereinrichtung 220 Hits 175 entweder aus dem Prüfspeicher 160 oder unter Umgebung des Prüfspeichers 160 direkt aus dem Prüfdaten-Erfassungsfilter 150 zurückgewinnen.

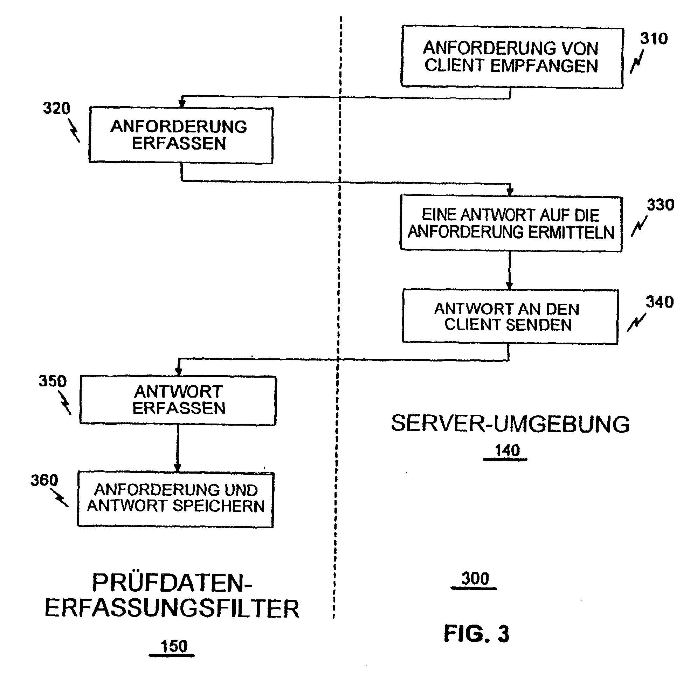

Nachdem die Komponenten der vorliegenden Erfindung hiermit beschrieben sind, wird nun die Arbeitsweise der vorliegenden Erfindung diskutiert. Fig. 3 ist ein Flußdiagramm, das gemäß einer Ausführungsform der vorliegen Erfindung einen Betriebsablauf 300 des Prüfdaten-Erfassungsfilters 150 beim Erfassen von Anforderungen 134 und Antworten 132 während einer Benutzersitzung 130 veranschaulicht. In einem Schritt 310 empfängt die Server-Umgebung 140 eine Anforderung 134 von dem Client 110. In einem Schritt 320 erfaßt der Prüfdaten-Erfassungsfilter 150 die Anforderung 134.

In einer Ausführungsform der vorliegenden Erfindung erfaßt der Prüfdaten-Erfassungsfilter 150 die Anforderung 134 in der Server-Umgebung 140. Insbesondere erfaßt in dieser Ausführungsform der Prüfdaten-Erfassungsfilter 150 die Anforderung 134 von der Server-Umgebung 140, nachdem die Server-Umgebung 140 die Anforderung 134 empfängt, aber bevor die Server-Umgebung 140 die Anforderung 134 verarbeitet.

In einer alternativen Ausführungsform der vorliegenden Erfindung kann die Server-Umgebung 140 die Anforderung 134 an den Prüfdaten-Erfassungsfilter 150 weiterleiten. Ferner existieren weitere Mechanismen, die es dem Prüfdaten-Erfassungsfilter 150 erlauben, Zugriff auf die Anforderung 134 zu erhalten. In jedem Fall stört oder unterbricht das Erfassen der Anforderung 134 nicht die Kommunikation zwischem dem Client 110 und der Server-Umgebung 140.

In einer alternativen Ausführungsform der vorliegenden Erfindung erfaßt der Prüfdaten-Erfassungsfilter 150 die Anforderung 134 direkt von der Datenübertragungsver-bindung 125 ohne Mitwirkung oder Teilnahme der Server-Umgebung 140.

In einer bevorzugten Ausführungsform der vorliegenden Erfindung schließt das Erfassen der Anforderung 134 das Erfassen oder Bestimmen bestimmter (nicht dargestellter) Umgebungsdaten ein, die zu der Zeit oder um die Zeit herum, zu der die Anforderung 134 abgeschickt oder erfaßt wurde, mit dem Client 110 und der Server-Umgebung 140 assoziiert waren.

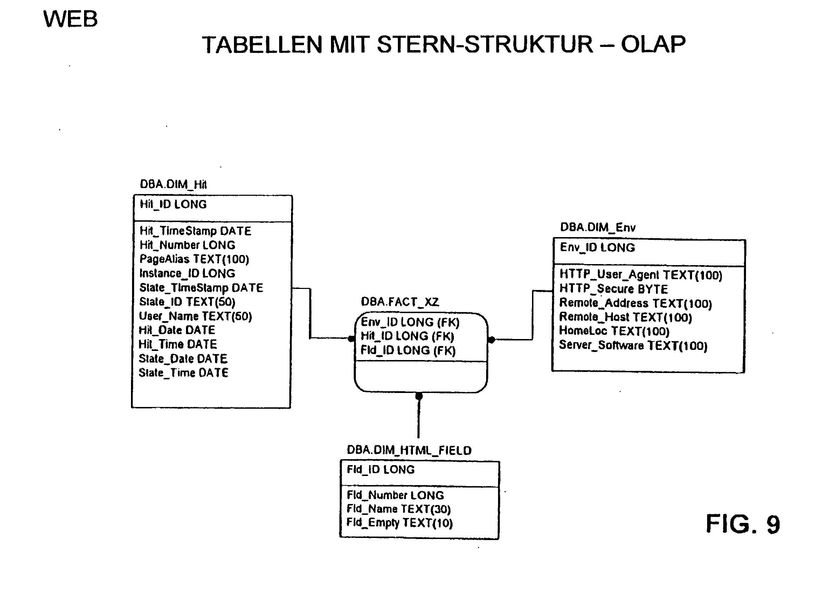

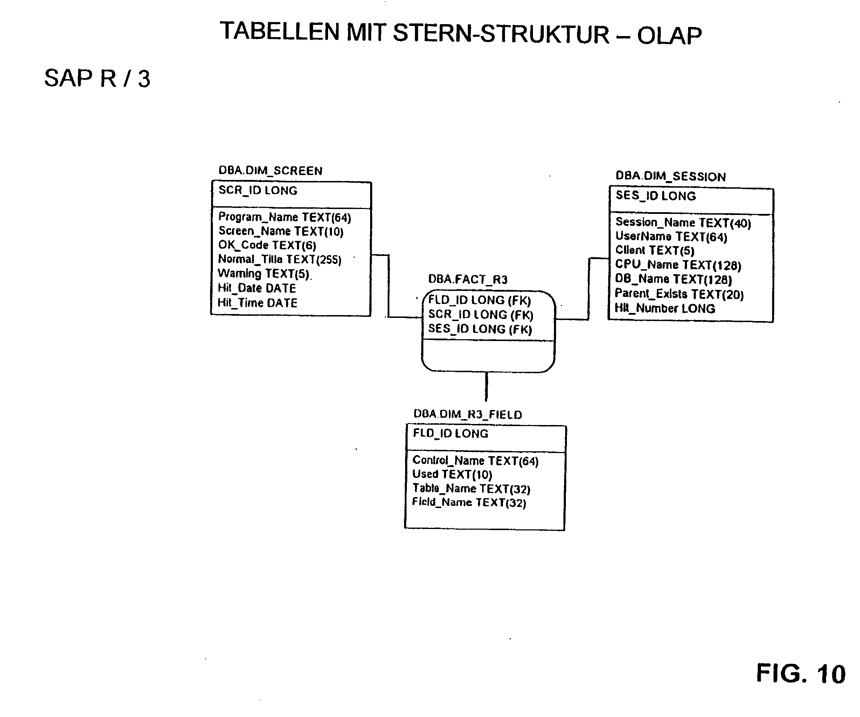

Diese Umgebungsdaten enthalten Parameter wie z.B. Auslastung, Umfang des Datenverkehrs, Status oder andere derartige Informationen, die auf der Datenübertragungsverbindung 125 verfügbar sind und die in der Client/Server-Umgebung 100 wohlbekannt sind. Solche Umgebungsdaten bzw. Daten über Umgebungsfaktoren können z.B. die Art des (Web-)Browsers, die IP-Adresse des Client 110, der Zeitpunkt der Anforderung 134 oder die Angabe für das benutzte Portal (z.B. Yahoo, Excite) sein. In Fig. 9 ist mit DBA.DIM-Env ein spezielles und in Fig. 10 ein weiteres Ausführungsbeispiel angegeben.

Wie unten diskutiert wird, ermöglichen es die Umgebungsdaten der Analysiereinrichtung 220, den Einfluß der Client/Server-Umgebung 100 auf eine bestimmte Benutzersitzung 170 auszuwerten.

In einem Schritt 330 bestimmt die Server-Umgebung 140 eine Antwort 132 auf die Anforderung 134 des Client 110. In einem Schritt 340 sendet die Server-Umgebung 140 die Antwort 132 an den Client 110. In einem Schritt 350 erfaßt der Prüfdaten-Erfassungsfilter 150 gemäß einer Ausführungsform der vorliegenden Erfindung die Antwort 132 der Server-Umgebung 140 an den Client 110.

In einer alternativen Ausführungsform kann die Server-Umgebung 140 die Antwort 132 an den Prüfdaten-Erfassungsfilter 150 weitergeben. In einer weiteren alternativen Ausführungsform der vorliegenden Erfindung erfaßt der Prüfdaten-Erfassungsfilter 150 die Antwort 132 direkt von der Datenübertragungsverbindung 125. Wie oben unter Bezug auf das Erfassen der Anforderung 134 diskutiert wurde, beinhaltet das Erfassen der Antwort 132 in einer bevorzugten Ausführung der vorliegenden Erfindung zudem das Erfassen von Umgebungsdaten, die mit der Antwort 132 verknüpft sind.

Schließlich speichert der Prüfdaten-Erfassungsfilter 150 in einem Schritt 360 die erfaßte Anforderung 134 und die erfaßte Antwort 132 als Hit 175 in dem Prüfspeicher 160. Insbesondere wird jeder Hit 175 (oder jedes Anforderung/Antwort-Paar) zusammen mit anderen Hits, die zu einer bestimmten Benutzersitzung 170 gehören, in dem Prüfspeicher 160 gespeichert.

In einer alternativen Ausführungsform der vorliegenden Erfindung speichert der Prüfdaten-Erfassungsfilter 150 die erfaßte Anforderung 134 in dem Prüfspeicher 160, sobald diese erfaßt worden ist, anstatt auf eine zugehörige erfaßte Antwort 132 zu warten. Die erfaßte Anforderung 134 und die erfaßte Antwort 132 werden also jeweils gespeichert, sobald sie erfaßt sind.

Gemäß einer Ausführungsform der vorliegenden Erfindung erfaßt oder empfängt der Prüfdaten-Erfassungsfilter 150 Anforderungen 134 und/oder Antworten 132 von der Server-Umgebung 140. Bei einer realen Implementierung kann der Prüfdaten-Erfassungsfilter 150 in der Server-Umgebung 140 resident sein und in Verbindung mit ihr arbeiten. Bei dieser Implementierung und gemäß der vorliegenden Erfindung benötigt der Client 110 in Verbindung mit dem Prüfdaten-Erfassungsfilter 150 weder Software, Hardware oder eine Kombination von Software und Hardware noch eine Modifikation an seiner Software oder Hardware.

In einer alternativen Ausführungsform der vorliegenden Erfindung erfaßt der Prüfdaten-Erfassungsfilter 150 die Anforderungen 134 und die Antworten 132 direkt von der Datenübertragungsverbindung. Bei dieser Ausführungsform der vorliegenden Erfindung sind in Verbindung mit dem Prüfdaten-Erfassungsfilter 150 weder in dem Client 110 noch in der Server-Umgebung 140 Software, Hardware oder eine Kombination von Software und Hardware erforderlich.

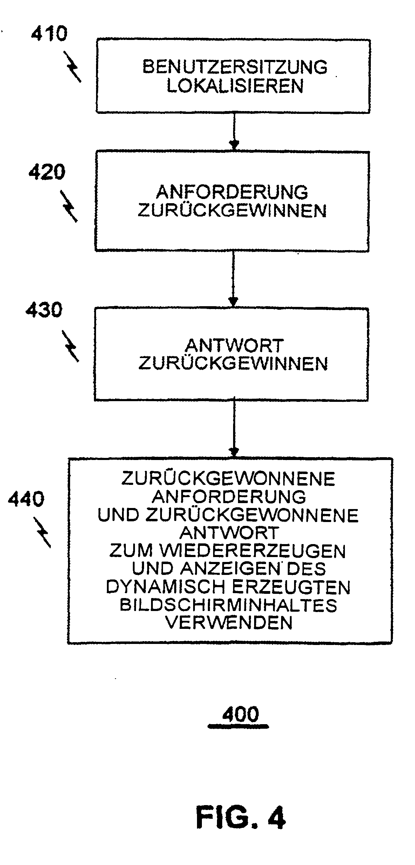

Fig. 4 ist ein Flußdiagramm, das gemäß einer Ausführungsform der vorliegenden Erfindung die Arbeitsweise 400 der Analysiereinrichtung 220 veranschaulicht, die gemäß einer Ausführungsform der vorliegenden Erfindung das Analysieren einer Benutzersitzung 170 ermöglicht. In einem Schritt 410 lokalisiert die Analysiereinrichtung 220 eine bestimmte Benutzersitzung 170 in dem Prüfspeicher 160. In einer alternativen Ausführungsform, die ohne Prüfspeicher 160 arbeitet, gibt die Analysiereinrichtung 220 dem Prüfdaten-Erfassungsfilter 150 eine bestimmte Benutzersitzung 170 an, die analysiert werden soll.

Die Benutzersitzung 170 kann durch eine Vielzahl von Mechanismen lokalisiert werden. Solche Mechanismen können es der Analysiereinrichtung ermöglichen, entsprechend dem Datum, das zu einer bestimmten gesuchten Benutzersitzung 170 gehört, und/oder der Sitzungsnummer, die zu einer bestimmten gesuchten Benutzersitzung 170 gehört, auf den Prüfspeicher 160 zuzugreifen. Es kann jedoch sein, daß das Datum und die Sitzungsnummer nicht in jedem Fall bekannt sind. Es ist dem Fachmann klar, daß die Analysiereinrichtung 220 daher andere Mechanismen zur Lokalisierung der Benutzersitzung 170 bereitstellen kann, z.B. das Durchsuchen des Prüfspeichers 160 nach Schlüsselworten, nach Identifikatoren usw., oder irgendeine andere Art und Weise, den Prüfspeicher 160 zu durchsuchen.

Nachdem eine Benutzersitzung 170 lokalisiert worden ist, gewinnt (englisch: retrieves) die Analysiereinrichtung 220 in einem Schritt 420 die Anforderung 134 aus dem Prüfspeicher 160 zurück. Aus dem Prüfspeicher 160 werden also die erforderlichen Daten abgerufen bzw. herausgefunden, um die Anforderung 134 wiederzugewinnen bzw. wiederzuerzeugen. Gleichermaßen gewinnt die Analysiereinrichtung 220 in einem Schritt 430 die Antwort 132, die der Anforderung 134 entspricht, aus dem Prüfspeicher 160 zurück. Wie oben diskutiert wurde, kann die Analysiereinrichtung 220 in einer alternativen Ausführungsform der vorliegenden Erfindung die Anforderung 134 und die Antwort 132 direkt aus dem Prüfdaten-Erfassungsfilter 150 zurückgewinnen.

In einer bevorzugten Ausführungsform der vorliegenden Erfindung gewinnt die Analysiereinrichtung 220 beim Zurückgewinnen der Anforderung 134 und der Antwort 132 auch zugehörige Umgebungsdaten zurück, die mit jeder Anforderung 134 und Antwort 132 gespeichert worden sein können, wie oben diskutiert wurde.

In einem Schritt 440 verwendet die Analysiereinrichtung 220 die zurückgewonnene Anforderung und die zurückgewonnene Antwort, und in der bevorzugten Ausführungsform auch die zurückgewonnenen Umgebungsdaten; die jeweils zu ihnen gehören, um den dynamisch erzeugten Bildschirminhalt 120 wiederzuerzeugen und darzustellen. Auf diese Weise ist die Analysiereinrichtung 220 in der Lage, dem Analysten 210 einen dynamisch erzeugten Bildschirminhalt 120 zu präsentieren, der der gleiche ist wie derjenige, den der Client 110 während der Benutzersitzung 130 betrachtet hat.

Die Analysiereinrichtung 220 erzeugt unter Verwendung der Dialog-Daten den Bildschirminhalt 120. Die ursprüngliche Client-Server-Anwendung muß dabei nicht laufen, d.h. die Analyse kann ohne laufende Anwendung erfolgen. Die komplette Sitzung muß nicht gespeichert werden.

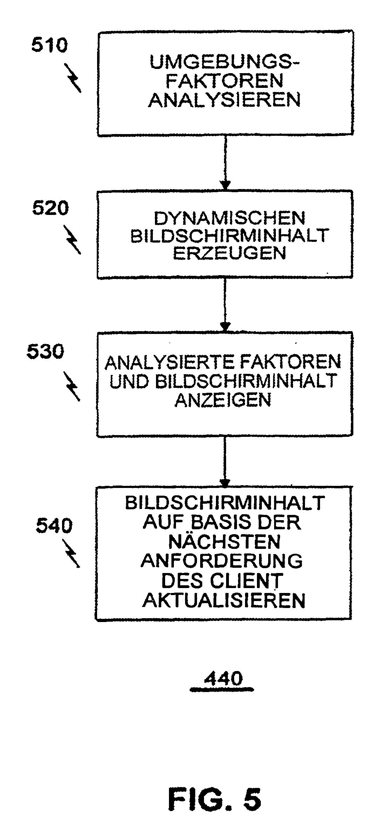

Fig. 5 veranschaulicht die Arbeitsweise einer bevorzugten Ausführungsform des Schrittes 440 detaillierter. In einem Schritt 510 untersucht die Analysiereinrichtung 220 die Umgebungsdaten und andere Faktoren, die zu der zurückgewonnenen Anforderung 134 und zu der zurückgewonnenen Antwort 132 gehören. In einem Schritt 520 erzeugt die Analysiereinrichtung 220 auf Basis der zurückgewonnenen Anforderung 134 und der zurückgewonnenen Antwort 132 einen Bildschirminhalt und stellt damit den dynamisch erzeugten Bildschirminhalt 120 wieder her. In einem Schritt 530 zeigt die Analysiereinrichtung 220 dem Analysten 210 die analysierten Umgebungsdaten und den erzeugten Bildschirminhalt an. Dies erlaubt es dem Analysten 210, sich den wiederhergestellten Bildschirminhalt im Zusammenhang mit den Umgebungsfaktoren, die die bestimmte Benutzersitzung 170 beeinflußt haben können, anzuschauen.

In einer bevorzugten Ausführungsform der vorliegenden Erfindung wird der wiedererzeugte Bildschirminhalt in einem Schritt 540 aktualisiert, um die von dem Benutzer des Client 110 eingegebenen Daten wiederzugeben. Diese Daten werden aus einer nachfolgenden Anforderung 134 des Client 110 an die Server-Umgebung 140 in der bestimmten Benutzersitzung 170 gewonnen.

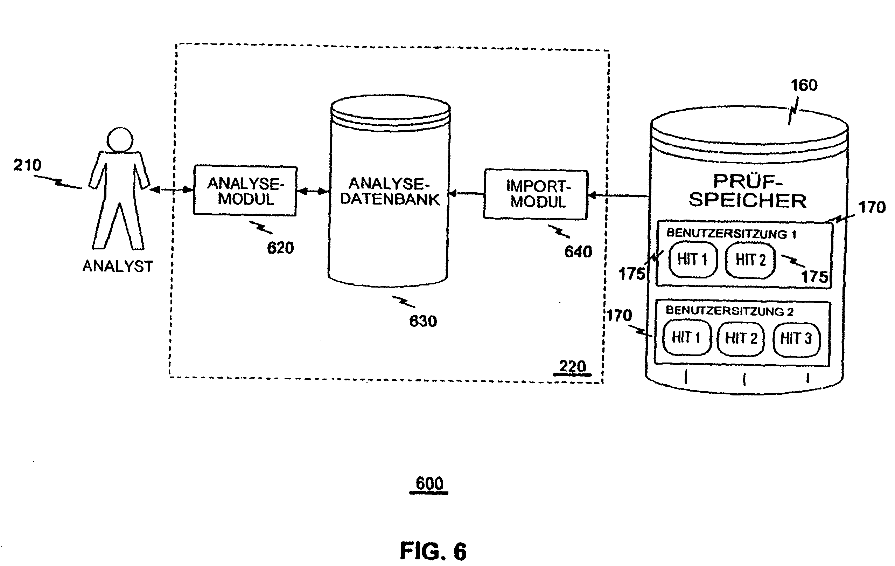

Die Analysiereinrichtung 220 wird nun unter Bezug auf Fig. 6 detaillierter diskutiert. Die Analysiereinrichtung 220 umfaßt ein Analysemodul 620, eine Analysedatenbank 630 und ein Importmodul 640. Das Importmodul 640 gewinnt aus den in dem Prüfspeicher 160 gespeicherten Rohdaten der Benutzersitzung 170 bedeutsame Information zurück, damit sie von dem Analysten 210 verwendet werden kann. In einer bevorzugten Ausführungsform der vorliegenden Erfindung gewinnt das Importmodul 640 Information aus Hits 175 der Benutzersitzung 170 aus dem Prüfspeicher 160 zurück und speichert sie in einem bestimmten, für die Analysedatenbank 630 eindeutigen Format in der Analysedatenbank 630.

Zum Beispiel gewinnt das Importmodul 640 bei einer Anwendung Information aus Hits 175 zurück, die in einer Internet-Umgebung erfaßt worden sind, während es bei einer anderen Anwendung Information aus Hits 175 zurückgewinnt, die in einer SAP R/3-Umgebung erfaßt worden sind. Dadurch kann das Importmodul 640 Sitzungsdaten, die zu einer Vielzahl von Clienten 110 und Server-Umgebungen 140 gehören, zurückgewinnen und sie in einer zentralen, einheitlichen Datenbank, wie z.B. der Analysedatenbank 630, kombinieren. Somit können anschließend angewendete Analyse-Tools (wie z.B. das Analysemodul 620) die Sitzungsdaten ungeachtet des Formats der erfaßten-Hits 175 analysieren. Dadurch, daß sie das gemeinsame Format der Analysedatenbank 630 verwenden, können nachfolgend angewendete Analyse-Tools darüber hinaus sinnvolle Vergleiche der Sitzungsdaten durchführen, die von verschiedenen Clienten 110, Server-Umgebungen 140, Anwendungen usw., vorliegen.

In einer bevorzugten Ausführungsform der vorliegenden Erfindung enthalten die Daten, die in der Analysedatenbank 630 gespeichert sind, relevante Daten aus der Anforderung 134 und der Antwort 132 und die zugehörigen Umgebungsdaten. Diese Daten enthalten Information, die mit dem Client 110 und der Server-Umgebung 140 verknüpft und aus ihnen abgeleitet sind, sowie die verwendeten Kommunikationsprotokolle und weitere relevante Information, die für denjenigen, der mit verschiedenen Netzwerk-Protokollen vertraut ist, geläufig ist.

In einer bevorzugten Ausführungsform der vorliegenden Erfindung weist die Analysedatenbank 630 für jede Anwendung in der Client/Server-Umgebung 100 zwei Sätze von Tabellen auf. Die ersten Tabellen werden als OLAP ("Online Analysis Program" bzw. "Online Analytical Processing")-Analysetabellen bezeichnet. OLAP-Verfahren sind aus der Literatur bekannt, beispielsweise aus P. Gray und H. J. Watson, Decision Support In The Data Warehouse, Prentice Hall 1998, New Jersey, wo in Anhang 1 die sogenannten zwölf Codd'schen Regeln für OLAP erläutert sind.

Die OLAP-Analysetabellen sind für eine vorläufige OLAP-Analyse ausgelegt und optimiert. In einer bevorzugten Ausführungsform der vorliegenden Erfindung weisen die OLAP-Analysetabellen eine Sternstruktur auf und sind vollständig indexiert. Fig. 9 veranschaulicht eine bevorzugte Ausführungsform für eine Sternstruktur für Hits, die in einer Internet-Umgebung oder in einer Umgebung auf Web-Basis erfaßt wurden, während Fig. 10 eine bevorzugte Ausführungsform für eine Sternstruktur für Hits veranschaulicht, die in einer SAP R/3-Umgebung erfaßt wurden.

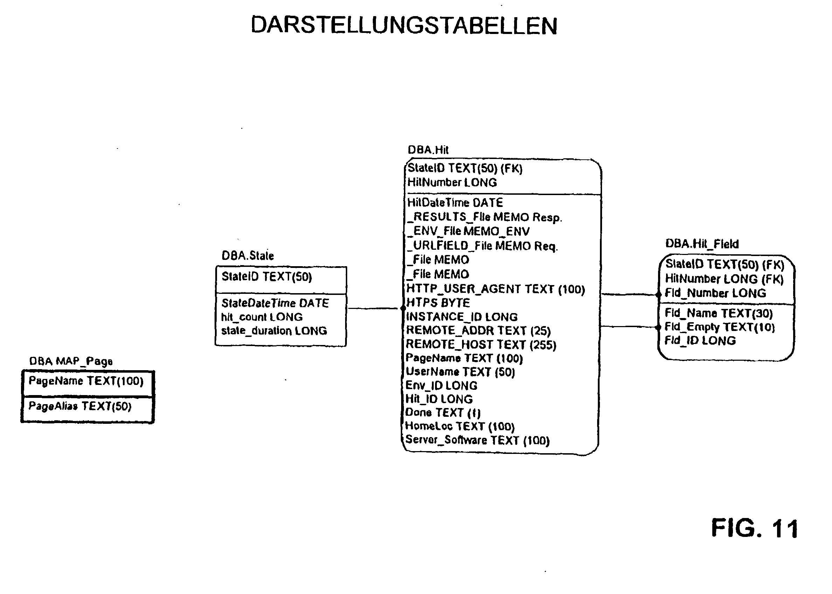

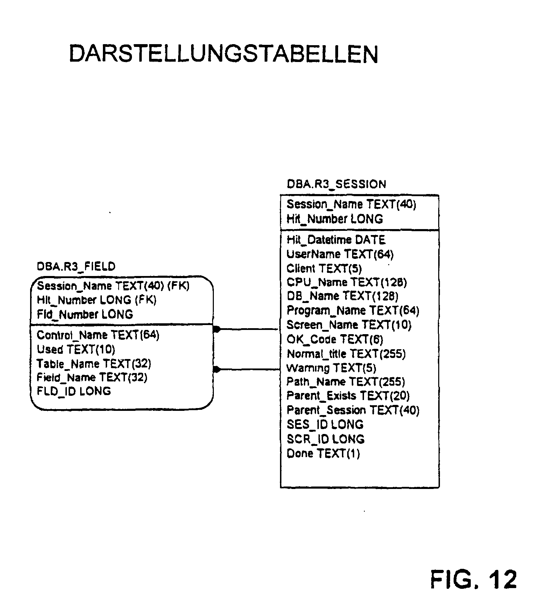

Die zweiten Tabellen in der Datenbank 630 werden als Sitzungs-Darstellungs/Analyse-Tabellen bezeichnet. Die Sitzungs-Darstellungs/Analyse-Tabellen sind dazu ausgelegt und optimiert, die Benutzersitzung 130 visuell wiederzuerzeugen und eine sitzungsspezifische Analyse durchzuführen. Die Sitzungs-Darstellungs/Analyse-Tabellen enthalten die gesamte Information der Hits sowie Information über das Wiedererzeugen von verfügbaren Sitzungen und Information, die aus der Identifikation der Sitzung zurückgewonnen wurde. Fig. 11 veranschaulicht eine bevorzugte Ausführungsform einer Darstellungstabelle für Hits, die in der Internet-Umgebung oder in der Umgebung auf Web-Basis erfaßt wurden, während Fig. 12 eine bevorzugte Ausführungsform einer Darstellungstabelle für Hits, die in einer SAP R/3-Umgebung erfaßt wurden, veranschaulicht.

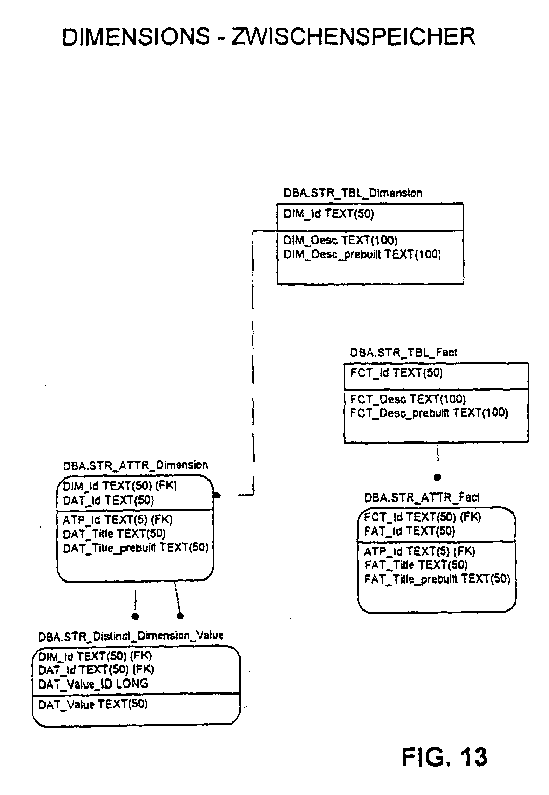

Fig. 13 veranschaulicht eine Datenstruktur eines Dimensions-Zwischenspeichers gemäß einer Ausführungsform der vorliegenden Erfindung. Man erkennt, daß die Dimensions-Zwischenspeicher-Datenstruktur nützlich ist, um die OLAP-Analyse zu beschleunigen.

In einer Ausführungsform der vorliegenden Erfindung speichert das Importmodul 640 auch Information aus dem Prüfspeicher 160 in ein (nicht gezeigtes) Archiv. Das Archiv ist vorzugsweise eine dauerhaftere Speichereinrichtung. Die in dem Archiv gespeicherte Informationen können Rohdaten sein, wie sie im Prüfspeicher 160 gespeichert sind, oder sie können Daten aus dem Prüfspeicher 160 sein, die von unwesentlichen, nicht mit der Funktion oder der Arbeitsweise der Analysiereinrichtung 220 verknüpften Informationen befreit wurden. In jedem Fall wird die Information, die in dem Archiv gespeichert wird, entsprechend der zu jeder Benutzersitzung 130 gehörenden Sitzungs-Identifikationsnummer indexiert. Da die Identifikation jeder Sitzung eindeutig ist und nicht wiederholt wird, kann das Archiv Benutzersitzungen 170 aus einer Vielzahl von Quellen und einer Vielzahl von Anwendungen speichern, ohne daß die Gefahr eines Konfliktes, der den Verlust von Daten nach sich zieht, besteht.

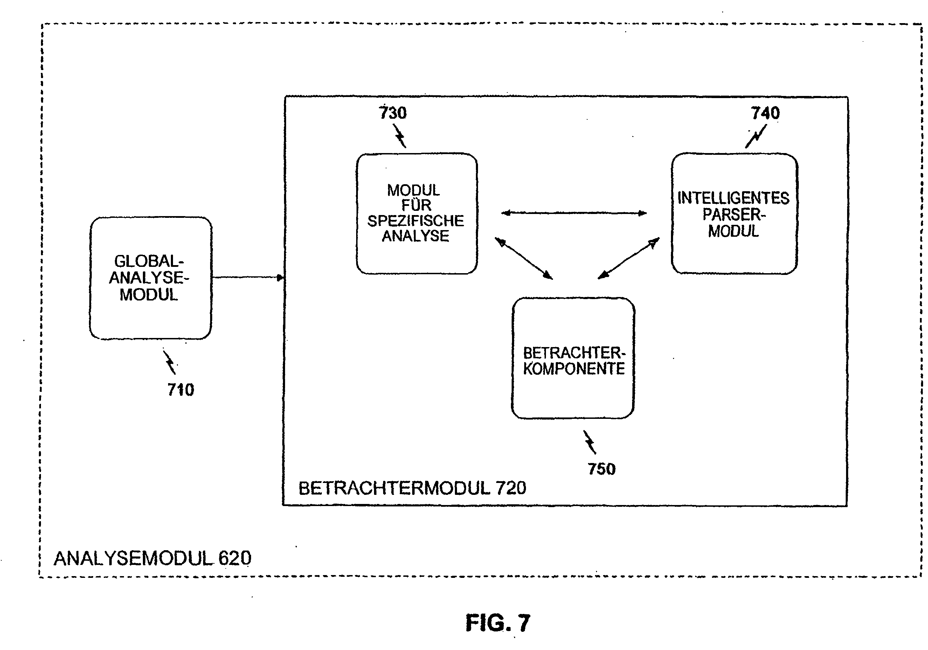

Das Analysemodul 620 wird nun in bezug auf Fig. 7 detaillierter beschrieben. Das Analysemodul 620 umfaßt ein Globalanalysemodul 710 und ein Darstellungsmodul 720. Das Darstellungsmodul 720 umfaßt ein Modul für spezifische Analyse 730, einen intelligenten Parser 740 und eine Darstellungskomponente 750.

Das Globalanalysemodul 710 ermöglicht es dem Analysten 210, Benutzersitzungen 170, die in der Analysedatenbank 630 gespeichert sind und die von verschiedenen Clienten 110, Server-Umgebungen 140 und verschiedenen in der Client/Server-Umgebung 100 laufenden Anwendungen stammen, dynamisch zu analysieren. Zum Beispiel ermöglicht es das Globalanalysemodul 110 dem Analysten 210, Benutzersitzungen 170 für alle Clienten 110 zu analysieren, die auf eine bestimmte Site in der Server-Umgebung 140 zugegriffen haben.

In einem anderen Beispiel ermöglicht das Globalanalysemodul 710 dem Analysten 210, Benutzersitzungen 170 für einen bestimmten Client 110 zu analysieren, der auf eine Vielzahl von Sites in verschiedenen Server-Umgebungen 140 zugegriffen hat. In einem weiteren Beispiel ermöglicht es das Globalanalysemodul 710 dem Analysten 210, alle Benutzersitzungen 170 für alle Clienten 110 in allen Server-Umgebungen 140 zu analysieren, die an einem bestimmten Tag zum Erwerb von Waren geführt haben. Dies sind nur Beispiele dafür, wie das Globalanalysemodul 710 auf die Analysedatenbank 630 zugreifen könnte, wobei eine Beschränkung nur durch den Informationsumfang, der in der Analysedatenbank 630 selbst zur Verfügung steht, gegeben ist.

Das Darstellungsmodul 720 ist dafür verantwortlich, eine bestimmte Benutzersitzung 130 visuell wiederzuerzeugen, eine Analyse des Sitzungslevels (englisch: session level analysis) vorzunehmen und die Benutzersitzung dem Analysten 210 zu präsentieren. Wie oben erwähnt wurde, umfaßt das Darstellungsmodul 720 eine Komponente für spezifische Analyse 730, ein intelligentes Parser-Modul 740 und eine Darstellungskomponente 750. Die Komponente für spezifische Analyse 730 ist für das ständige Bereitstellen statistischer Information, die zu einem bestimmten dynamisch erzeugten Bildschirminhalt 120 gehört, und der Umgebungsdaten, die zu diesem Bildschirminhalt zum Zeitpunkt seiner Erzeugung und/oder Anzeige für den Client 110 gehörten, verantwortlich.

In einer bevorzugten Ausführungsform der vorliegenden Erfindung berechnet die Komponente 730 für spezifische Analyse auch Überlastungen in der Client/Server-Umgebung 100 auf dem Server 140 oder auf der Datenübertragungsleitung 125 für den Zeitpunkt, zu dem der Bildschirminhalt 120 dem Client 110 durch die Server-Umgebung 140 zur Verfügung gestellt wurde.

Die Darstellungskomponente 750 ist dafür verantwortlich, die Benutzersitzung 170 physisch darzustellen. Insbesondere stellt die Darstellungskomponente 750 dem Analysten 210 Mittel zur Verfügung, um die Benutzersitzung 170 durchzugehen und die statistischen Daten, die von der Komponente für spezifische Analyse 730 bereitgestellt werden, anzuzeigen.

In einer bevorzugten Ausführungsform der vorliegenden Erfindung existiert für jede Client/Server-Anwendung eine eigene Darstellungskomponente 750. Für HTML und XML umfaßt die Darstellungskomponente 750 einen Web-Browser. Für SAP R/3 ist die Darstellungskomponente 750 Bestandteil einer modifizierten Version einer Benutzeroberfläche, die von SAP R/3 verwendet wird. Es ist klar, daß für andere Anwendungen die Darstellungskomponente 750 ein geeignetes Darstellungsprogramm umfaßt. Mit anderen Worten: die spezifische Darstellungskomponente 750 wird in Abhängigkeit von einer bestimmten Client/Server-Anwendung verwendet.

Die intelligente Parser-Komponente 740 tastet die Analysedatenbank 630 ab, um festzustellen, ob sie HTML enthält. Wenn dies der Fall ist, stellt die intelligente Parser-Komponente 740 fest, ob die HTML Felder enthält, die es der intelligenten Parser-Komponente 740 ermöglichen, den Wert der Felder auf eine nachfolgende Benutzer-Anforderung 134 hin auf sichere Weise zu verändern. Auf diese Weise ist der Analyst 210 in der Lage, Daten zu betrachten, die der Client 110 entsprechend dem dynamisch erzeugten Bildschirminhalt 120, so wie er während der Benutzersitzung 130 aufgetreten ist, eingegeben hat. In einer bevorzugten Ausführungsform der vorliegenden Erfindung implementiert die intelligente Parser-Komponente 740 diese Funktion aus Sicherheitsgründen nicht für Password-Felder.

Wie somit beschrieben ist, speichert die vorliegende Erfindung alle Anforderungen 134 und Antworten 132, die zwischen dem Client 110 und der Server-Umgebung 140 stattfinden. Dieser Ansatz ist jedoch nicht in allen Client/Server-Umgebungen 100 erforderlich und vielleicht auch nicht erwünscht. In alternativen Ausführungsformen der vorliegenden Erfindung kann der Prüfdaten-Erfassungsfilter 150 nur dann Anforderungen 134 und Antworten 132 in dem Prüfspeicher 160 speichern, wenn ein signifikantes Ereignis eintritt. Ein signifikantes Ereignis umfaßt dabei vorzugsweise mindestens eine Anforderung 134 und eine Antwort 132.

Zum Beispiel werden in einer Ausführungsform der vorliegenden Erfindung Anforderungen 134 und Antworten 132 nur dann in dem Prüfspeicher 160 gespeichert, wenn ein Kauf abgeschlossen wurde. In diesem Beispiel ist der Kauf ein signifikantes Ereignis. In einer anderen Ausführungsform der vorliegenden Erfindung können signifikante Ereignisse weiter untergliedert werden. Zum Beispiel wird ein Satz von Sitzungsdaten für solche Clienten 110 gespeichert, die Waren im Wert von 10 Millionen Dollar oder mehr kaufen, während ein anderer Satz von Sitzungsdaten für solche Clienten 110 gespeichert wird, die Waren im Wert von weniger als 10 Millionen Dollar kaufen.

Diese Ausführungsform der vorliegenden Erfindung eliminiert einen großen Teil der Daten aus dem Prüfspeicher 160, die mit "Surfen" oder "Browsen" oder anderen unsignifikanten Ereignissen verknüpft sind, und die andernfalls gespeichert werden könnten. In anderen Ausführungsformen der vorliegenden Erfindung können solche zum "Surfen" oder "Browsen" gehörenden Daten jedoch nützlich sein, um bestimmte Verhaltensmuster (z.B. beim Einkaufen) festzustellen, und es kann erwünscht sein, diese Daten in dem Prüfspeicher 160 zu speichern. Die spezifischen signifikanten Ereignisse, die das Speichern von Sitzungsdaten in dem Prüfspeicher 160 auslösen, können von Anwendung zu Anwendung variieren.

Bei Ausführungsformen der vorliegenden Erfindung, die solche signifikanten Ereignisse als Kriterium zum Speichern von Sitzungsdaten benutzen, werden die Anforderungen 134 und die Antworten 132 vorzugsweise in einem temporären Speicher zwischengespeichert, bis das signifikante Ereignis eintritt. Sobald das signifikante Ereignis eintritt, werden die Anforderungen 134 und die Antworten 132 von dem temporären Speicher in den Prüfspeicher 160 übertragen. Dieser Übertragungsprozeß der Anforderungen 134 und der Antworten 132 von dem temporären Speicher in den Prüfspeicher 160 wird als "Eintragen" der Anforderungen 134 und der Antworten 132 in den Prüfspeicher 160 bezeichnet.

Ferner können andere Mechanismen zum Eintragen der Sitzungsdaten (d.h. der Anforderungen 134 und der Antworten 132) in den Prufspeicher 160 zur Verfügung stehen. Zum Beispiel könnten Sitzungsdaten vor dem signifikanten Ereignis in dem Prüfspeicher 160 gespeichert und als temporär oder nicht eingetragen markiert oder auf andere Weise gekennzeichnet werden. Sobald das signifikante Ereignis eintritt, werden diese Daten als eingetragen gekennzeichnet. Wenn das signifikante Ereignis nicht eintritt, werden diese Daten anschließend gelöscht oder unlesbar gemacht.

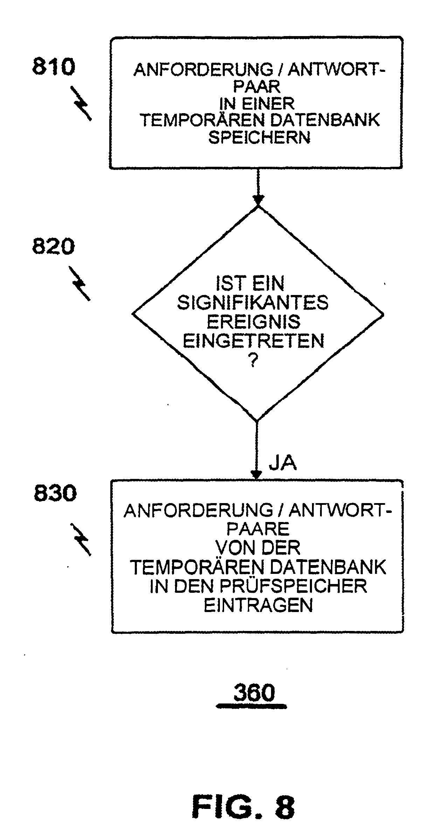

Vor diesem Hintergrund wird nun gemäß dieser Ausführungsform der vorliegenden Erfindung der Speichervorgang 360 unter Bezug auf Fig. 8 beschrieben. In einem Schritt 810 speichert der Prüfdaten-Erfassungsfilter 150 ein Anforderung/Antwort-Paar in einer temporären Datenbank oder einem temporären Speicher. In einem Entscheidungsschritt 820 stellt der Prüfdaten-Erfassungsfilter 150 fest, ob ein signifikantes Ereignis eingetreten ist. Wenn das signifikante Ereignis eingetreten ist, trägt der Prüfdaten-Erfassungsfilter 150 in einem Schritt 830 die Anforderung/Antwort-Paare, die in der temporären Datenbank oder in dem temporären Speicher gespeichert sind, in den Prüfspeicher 160 ein. Wenn an einer bestimmten Stelle des Ablaufs nicht in die temporäre Datenbank oder den temporären Speicher eingetragen wurde, löscht der Prüfdaten-Erfassungsfilter 150 die temporäre Datenbank oder den temporären Speicher.

Zusammengefaßt lassen sich erfindungsgemäße Aspekte mit anderen Worten vereinfacht wie folgt beschreiben: Ein System bzw. ein Verfahren zum Prüfen von Netzwerk-Anwendungen erfaßt während einer Benutzersitzung 130 Übertragungen zwischen einem Client 110 und einem Server 140. Ein Prüfdaten-Erfassungsfilter 150 erfaßt und speichert jede Anforderung 134 des Client 110 und jede Antwort 132 des Server 140 auf jede Anforderung 132 in einem Prüfspeicher 160 in einer Form, die es einem Analysten 210, d.h. einer Person, die die Benutzersitzung 130 analysieren möchte, gestattet, die Benutzersitzung 130 in der Weise wiederzuerzeugen, in der sie dem Client 110 ursprünglich dargestellt wurde. Vorzugsweise stellt das System dem Analysten 210 auch Umgebungsdaten bereit.

Ein prüfender Analyst 210 kann die erfaßten Anfordrunen 134 und die erfaßten Antworten 132 dazu benutzen, die Benutzersitzung 130 visuell wiederzuerzeugen, um dabei zu analysieren was sich während der Benutzersitzung 130 ereignet hat. Auf diese Weise können beispielsweise technische Analysen, z.B. um die Ursache einer Fehlfunktion, oder kommerzielle Analysen, z.B. die Analyse des Käuferverhaltens oder eines Client 110, der eine Website besucht, durchgeführt werden. Bei dem Speichern, Erfassen oder Analysieren können natürlich aus Datenschutzgründen erforderliche Anonymisierungen vorgenommen werden.

Nachdem die Erfindung detailliert und unter Bezug auf spezifische Ausführungsformen beschrieben worden ist, ist es für einen Fachmann offensichtlich, daß verschiedene Änderungen und Modifikationen vorgenommen werden können, ohne vom Sinn und vom Schutzbereich der Erfindung abzuweichen. Die vorliegende Erfindung bezieht sich daher auch auf Modifikationen und Abwandlungen der Erfindung, vorausgesetzt daß diese Modifikationen und Abwandlungen innerhalb des Schutzbereichs der beigefügten Ansprüche und ihrer Äquivalente liegen.

## Patentansprüche

1. Verfahren zum visuellen Wiedererzeugen einer Benutzersitzung (130, 170) in einer on-line Computer-Umgebung, die einen Client (110) und einen Server (140) aufweist,
wobei das Verfahren folgende Schritte beinhaltet:
Empfangen einer Anforderung (134) des Client (110) in dem Server (140) wobei der Schritt des Empfangens einer Anforderung (134) den Schritt des Empfangens einer Anforderung (134) in einer Client/Server-Umgebung auf Internet-Basis beinhaltet;
Erfassen der Anforderung (134) und zu der Client/Server-Umgebung gehörender Daten in einem Prüfspeicher (160) ;
Ermitteln einer Antwort (132) auf die Anforderung (134) durch den Server (140);
Senden der Antwort (132) von dem Server (140) an den Client (110);
Erfassen der Antwort (132) auf die Anforderung (134) und zu der Client/Server-Umgebung gehörender Daten in dem Prüfspeicher (160) ;
Speichern der Anforderung (134) und der Antwort (132) in dem Prüfspeicher (160) ;
Visuelles Wiedererzeugen der Benutzersitzung (130, 170) auf Basis der gespeicherten Anforderung (134) und der gespeicherten Antwort (132) aus dem Prüfspeicher (160).

2. Verfahren nach Anspruch 1, wobei der Schritt des Erfassens der Anforderung (134) den Schritt des Empfangens von durch den Client (110) gesendeten Eingabedaten beinhaltet.

3. Verfahren nach Anspruch 2, wobei der Schritt des Erfassens der Anforderung (134) ferner den Schritt des Empfangens einer Sitzungs-Identifikation beinhaltet, die mit dem Client (110) verknüpft ist.

4. Verfahren nach einem der Ansprüche 1 bis 3, wobei der Schritt des Erfassens der Anforderung (134) das Erfassen der Anforderung (134) unter Mitwirkung des Servers (140) beinhaltet.

5. Verfahren nach einem der Ansprüche 1 bis 4, wobei der Schritt des Erfassens der Anforderung (134) das Erfassen der Anforderung (134) direkt von einer Datenübertragungsverbindung (125), die den Client (110) und den Server (140) miteinander verbindet, beinhaltet.

6. Verfahren nach einem der Ansprüche 1 bis 5, wobei der Schritt des Erfassens der Antwort (132) das Erfassen der Antwort (132) unter Mitwirkung des Servers (140) beinhaltet.

7. Verfahren nach einem der Ansprüche 1 bis 6, wobei der Schritt des Erfassens der Antwort (132) das Erfassen der Antwort (132) direkt von einer Datenübertragungsverbindung (125), die den Client (110) und den Server (140) miteinander verbindet, beinhaltet.

8. Verfahren nach einem der vorhergehenden Ansprüche, das vor dem Schritt des Speicherns ferner einen Schritt des Erfassens der Anforderung (134) in dem Server (140) durch einen Prüfdaten-Erfassungsfilter (150) beinhaltet.

9. Verfahren nach einem der vorhergehenden Ansprüche, das vor dem Schritt des Speicherns ferner einen Schritt des Erfassens der Antwort (132) in dem Server (140) durch einen Prüfdaten-Erfassungsfilter (150) beinhaltet.

10. Verfahren nach Anspruch 8 oder 9, **dadurch gekennzeichnet, daß** der Prüfdaten-Erfassungsfilter (150) in der Server-Umgebung (140) resident ist.

11. Verfahren nach einem der vorhergehenden Ansprüche, wobei der Schritt des Ermittelns einer Antwort (132) den Schritt des Bestimmens einer Auszeichnungssprachen-Datei auf Basis der Anforderung (134) beinhaltet.

12. Verfahren nach einem der vorhergehenden Ansprüche, wobei der Schritt des visuellen Wiedererzeugens der Benutzersitzung (130, 170) folgende Schritte umfaßt:
Lokalisieren der Benutzersitzung (130, 170);
Zurückgewinnen der Anforderung (134) ;
Zurückgewinnen der Antwort (132) ;
Wiedererzeugen eines dynamisch erzeugten Bildschirminhalts (120) auf Basia der zurückgewonnenen Antwort (132); und
Anzeigen des wiedererzeugten dynamisch erzeugten Bildschirminhalts (120).

13. Verfahren nach Anspruch 12, wobei der Schritt des Wiedererzeugens eines dynamisch erzeugten Bildschirminhalts (120) folgende Schritte beinhaltet:
Analysieren von Umgebungsfaktoren, die mit dem Client (110) und dem Server (140) verknüpft sind;
Erzeugen des dynamisch erzeugten Bildschirminhalts (120) aus der zurückgewonnenen Antwort (132);
Anzeigen der analysierten Umgebungsfaktoren; und
Anzeigen des erzeugten, dynamisch erzeugten Bildschirminhalts (120).

14. Verfahren nach Anspruch 13, das ferner den Schritt des Aktualisierens des erzeugten, dynamisch erzeugten Bildschirminhalts (120) auf Basis einer nächsten Anforderung (134) von dem Client (110) beinhaltet.

15. Verfahren nach Anspruch 14, wobei der Schritt des Empfangens einer Antwort (132) den Schritt des Empfangens einer Antwort (132) in einer Client/ Server-Umgebung auf Internet-Basis beinhaltet.

16. Verfahren nach einem der vorhergehenden Ansprüche, wobei der Schritt des Empfangens einer Anforderung (134) den Schritt des Empfangens einer Anforderung (134) in einem dedizierten System beinhaltet.

17. Verfahren nach Anspruch 16, wobei der Schritt des Empfangens einer Antwort (132) den Schritt des Empfangens einer Antwort (132) in einem dedizierten System beinhaltet.

18. Verfahren nach einem der vorhergehenden Ansprüche, wobei die Anforderung (134) und die Antwort (132) als ein Hit (135, 175) gespeichert werden.

19. Verfahren nach Anspruch 18, wobei der Schritt des Wiedererzeugens der Benutzersitzung (130, 170) folgende Schritte beinhaltet:
Lokalisieren der Benutzersitzung (130, 170) ;
Zurückgewinnen des gespeicherten Hits (135, 175);
Wiederherstellen eines dynamisch erzeugten Bildschirminhalts (120) auf Basis des zurückgewonnenen Hits (135, 175); und
Anzeigen des wiederhergestellten dynamisch erzeugten Bildschirminhalts (120).

20. Verfahren nach Anspruch 19, wobei der Schritt des Wiedererzeugens eines dynamisch erzeugten Bildschirminhalts (120) folgende Schritte beinhaltet:
Analysieren von Umgebungsfaktoren, die mit dem Client (110) und dem Server (140) verknüpft sind;
Erzeugen des dynamisch erzeugten Bildschirminhalts (120) aus dem zurückgewonnenen Hit (135, 175);
Anzeigen der analysierten Umgebungsfaktoren; und
Anzeigen des erzeugten dynamisch erzeugten Bildschirminhalts (120).

21. Verfahren nach Anspruch 19, das ferner den Schritt des Aktualisierens des erzeugten, dynamisch erzeugten Bildschirminhalts (120) auf Basis einer nächsten Anforderung (134) des Client beinhaltet.

22. Verfahren nach einem der vorhergehenden Ansprüche,
wobei der Schritt des Speicherns folgende Schritte beinhaltet:
Speichern der Anforderung (134) und der Antwort (132) in einem temporären Speicher;
Ermitteln, ob ein signifikantes Ereignis stattgefunden hat; und
Eintragen der Anforderung (134) und der Antwort (132) in den temporären Speicher, falls das signifikante Ereignis stattgefunden hat.

23. Verfahren nach Anspruch 22, wobei das signifikante Ereignis ein Geschäftsabschlußereignis ist.

24. System zum visuellen Wiedererzeugen einer Benutzersitzung (130, 170) in einer on-line-Computerumgebung, die einen Client (110) und einen Server (140) aufweist, umfassend
eine Datenübertragungsverbindung (125) zwischen dem Client (110) und dem Server (140) ;
einen Prüfspeicher (160); und
einen Prüfdaten-Erfassungsfilter (125), der eine Anforderung (134) des Client (110) an den Server (140) und zu der Client-Server-Umgebung gehörender Daten erfaßt, der die Anforderung (134) und zu der Client-Server-Umgebung gehörender Daten in dem Prüfspeicher (160) speichert, der eine zu der Anforderung (134) und zu der Client-Server-Umgebung gehörender Daten gehörende, von dem Server (140) an den Client (110) gesendete Antwort (132), ermittelt und erfaßt, und der die Antwort (132) und zu der Client-Server-Umgebung gehörender Daten in dem Prüfspeicher (160) speichert, wobei die gespeicherte Anforderung (134) und die gespeicherte Antwort. (132) zum visuellen Wiedererzeugen der Benutzersitzung (130, 170) benutzt wird und wobei die Anforderung (134) sich auf eine Anforderung in einer Client-Server-Umgebung auf Internet-Basis bezieht.

25. Maschinenlesbarer Datenträger, auf dem eine Anzahl von Befehlen gespeichert sind, die bei ihrer Ausführung durch einen Prozessor den Prozessor veranlassen, ein Verfahren nach einem der Ansprüche 1 bis 23 durchzuführen.

## Claims

1. Method for visually recreating a user session (130,170) in an on-line computer environment including a client (110) and a server (140), the method comprising the steps of:
receiving a request (134) from the client (110) at the server (140), wherein the step of receiving a request (134) comprises the step of receiving a request (134) in an Internet based client/server environment;
capturing the request (134) and the data associated with the client/server environment in an auditor storage (160);
determining, by the server (140), a response (132) to the request (134);
sending the response (132) from the server (140) to the client (110);
capturing the response (132) to the request (134) and data associated with the client/server environment in the auditor storage (160);
storing the request (134) and the answer (132) in the auditor storage (160);
visually recreating the user session (130,170) based on the stored request (134) and the stored answer (132) from the auditor storage (160).

2. Method according to claim 1, wherein the step of capturing the request (134) comprises the step of receiving input data sent by the client (110).

3. Method according to claim 2, wherein the step of capturing the request (134) further comprises the step of receiving a session identification associated with the client (110).

4. Method according to any one of claims 1 to 3, wherein the step of capturing the request (134) comprises capturing said request (134) with the cooperation of the server (140).

5. Method according to any one of claims 1 to 4, wherein the step of capturing the request (134) comprises capturing said request (134) directly from a communication link (125) connecting the client (110) and the server (140).

6. Method according to any one of claims 1 to 5, wherein the step of capturing the answer (132) comprises capturing said answer (132) with the cooperation of the server (140).

7. Method according to any one of claims 1 to 6, wherein the step of capturing the answer (132) comprises capturing said answer (132) directly from a communication link (125) connecting the client (110) and the server (140).

8. Method according to any one of the preceding claims, further comprising, before the step of storing, a step of capturing the request (134) in the server (140) by an auditor capture filter (150).

9. Method according to any one of the preceding claims, further comprising, before the step of storing, a step of capturing the answer (132) at the server (140) by an auditor capture filter (150).

10. Method according to claim 8 or 9, **characterized in that** the auditor capture filter (150) resides in the server environment (140).

11. Method according to any one of the preceding claims, wherein the step of determining a response (132) comprises the step of determining a markup language file based on the request (134).

12. Method according to any one of the preceding claims, wherein the step of visually recreating the user session (130,170) comprises the steps of:
locating the user session (130,170);
retrieving the request (134);
retrieving the response (132);
recreating a dynamically generated screen (120) based on the retrieved response (132); and
displaying the recreated dynamically generated screen (120).

13. Method according to claim 12, wherein the step of recreating a dynamically generated screen (120) comprises the steps of:
analyzing environmental factors associated with the client (110) and the server (140);
generating the dynamically generated screen (120) from the retrieved response (132);
displaying the analyzed environmental factors; and
displaying the recreated, dynamically generated screen (120).

14. Method according to claim 13, further comprising the step of updating the recreated, dynamically generated screen (120) based on a next request (134) from the client (110).

15. Method according to claim 14, wherein the step of receiving a response (132) comprises the step of receiving a response (132) in an Internet based client/server environment.

16. Method according to any one of the preceding claims, wherein the step of receiving a request (134) comprises the step of receiving a request (134) in a dedicated system.

17. Method according to claim 16, wherein the step of receiving a response (132) comprises the step of receiving a response (132) in a dedicated system.

18. Method according to any one of the preceding claims, wherein the request (134) and the response (132) are stored as a hit (135,175).

19. Method according to claim 18, wherein the step of recreating the user session (130,170) comprises the steps of:
locating the user session (130,170);
retrieving the stored hits (135,175);
recreating a dynamically generated screen (120) based on the retrieved hits (135,175); and
displaying the recreated dynamically generated screen (120).

20. Method according to claim 19, wherein the step of recreating a dynamically generated screen (120) comprises the steps of:
analyzing environmental factors associated with the client (110) and the server (140);
creating the dynamically generated screen (120) from the retrieved hit (135,175);
displaying the analyzed environmental factors; and
displaying the created dynamically generated screen (120).

21. Method according to claim 19, further comprising the step of updating the created, dynamically generated screen (120) based on a next request (134) from the client.

22. Method according to any one of the preceding claims, wherein the step of storing comprises the steps of:
storing the request (134) and the response (132) in a temporary memory;
determining whether a significant event occurred; and
committing the request (134) and the response (132) in the temporary memory, if the significant event occurred.

23. Method according to claim 22, wherein the significant event is a business transaction event.

24. System for visually recreating a user session (130, 170) in an on-line computer environment including a client (110) and a server (140), comprising:
a communication link (125) between the client (110) and the server (140);
an auditor storage (160); and
an auditor capture filter (125) that captures a request (134) from the client (110) to the server (140) and data associated with the client/server environment in the auditor storage (160), said auditor capture filter storing the request (134) and data associated with the client/server environment in the auditor storage (160), determining and capturing a response (132) associated with the request (134) and data associated with the client/server environment, said request sent from the server (140) to the client (110), and storing the response (132) and data associated with the client/server environment in the auditor storage (160), wherein the stored request (134) and the stored response (132) are used to visually recreate the user session (130,170) and wherein the request (134) pertains to a request in an Internet based client/server environment.

25. Machine-readable data carrier in which a number of commands are stored which, when executed by a processor, induce the processor to perform a method according to any one of claims 1 to 23.

## Revendications

1. Procédé de restitution visuelle d'une session utilisateur (130, 170) dans un environnement informatique en ligne, qui présente un client (110) et un serveur (140), le procédé renfermant les phases suivantes :
réception d'une demande (134) du client (110) dans le serveur (140), la phase de réception d'une demande (134) renfermant la phase de réception d'une demande (134) dans un environnement client-serveur sur base Internet ; saisie de la demande (134) et de données correspondant à l'environnement client-serveur dans une mémoire de contrôle (160) ;
détermination d'une réponse (132) à la demande (134) par le serveur (140) ;
envoi de la réponse (132) par le serveur (140) au client (110) ;
saisie de la réponse (132) à la demande (134) et de données correspondant à l'environnement client-serveur dans la mémoire de contrôle (160) ;
mémorisation de la demande (134) et de la réponse (132) dans la mémoire de contrôle (160) ;
restitution visuelle de la session utilisateur (130, 170) sur la base de la demande mémorisée (134) et de la réponse mémorisée (132) à partir de la mémoire de contrôle (160).

2. Procédé suivant la revendication 1, dans lequel la phase de saisie de la demande (134) renferme la phase de réception de données d'entrée envoyées par le client (110).

3. Procédé suivant la revendication 2, dans lequel la phase de saisie de la demande (134) renferme en outre la phase de réception d'une identification de session, liée au client (110).

4. Procédé suivant l'une des revendications 1 à 3, dans lequel la phase de saisie de la demande (134) renferme la saisie de la demande (134) avec le concours du serveur (140).

5. Procédé suivant l'une des revendications 1 à 4, dans lequel la phase de saisie de la demande (134) renferme la saisie de la demande (134) directement d'une liaison de transmission de données (125), qui relie le client (110) et le serveur (140) entre eux.

6. Procédé suivant l'une des revendications 1 à 5, dans lequel la phase de saisie de la réponse (132) renferme la saisie de la réponse (132) avec le concours du serveur (140).

7. Procédé suivant l'une des revendications 1 à 6, dans lequel la phase de saisie de la réponse (132) renferme la saisie de la réponse (132) directement d'une liaison de transmission de données (125), qui relie le client (110) et le serveur (140) entre eux.

8. Procédé suivant l'une des revendications précédentes, qui renferme en outre, avant la phase de mémorisation, une phase de saisie de la demande (134) dans le serveur (140) par un filtre de saisie de données de contrôle (150).

9. Procédé suivant l'une des revendications précédentes, qui renferme en outre, avant la phase de mémorisation, une phase de saisie de la réponse (132) dans le serveur (140) par un filtre de saisie de données de contrôle (150).

10. Procédé suivant l'une des revendications 8 et 9, **caractérisé en ce que** le filtre de saisie de données de contrôle (150) est résident dans l'environnement serveur (140).

11. Procédé suivant l'une des revendications précédentes, dans lequel la phase de détermination d'une réponse (132) renferme la phase de définition d'un fichier de langages de marquage sur la base de la demande (134).

12. Procédé suivant l'une des revendications précédentes, dans lequel la phase de restitution visuelle de la session utilisateur (130, 170) comprend les phases suivantes :
localisation de la session utilisateur (130, 170) ;
récupération de la demande (134) ;
récupération de la réponse (132) ;
restitution d'un contenu d'écran (120) généré dynamiquement sur la base de la réponse récupérée (132) ; et
affichage du contenu d'écran (120) généré dynamiquement, restitué.

13. Procédé suivant la revendication 12, dans lequel la phase de restitution d'un contenu d'écran (120) généré dynamiquement renferme les phases suivantes :
analyse de facteurs d'environnement, liés au client (110) et au serveur (140) ;
élaboration du contenu d'écran (120) généré dynamiquement à partir de la réponse (132) récupérée ;
affichage des facteurs d'environnement analysés ; et
affichage du contenu d'écran (120) généré dynamiquement élaboré.

14. Procédé suivant la revendication 13, qui renferme en outre la phase d'actualisation du contenu d'écran (120) généré dynamiquement élaboré, sur la base d'une demande (134) suivante du client (110).

15. Procédé suivant la revendication 14, dans lequel la phase de réception d'une réponse (132) renferme la phase de réception d'une réponse (132) dans un environnement client-serveur sur base Internet.

16. Procédé suivant l'une des revendications précédentes, dans lequel la phase de réception d'une demande (134) renferme la phase de réception d'une demande (134) dans un système dédié.

17. Procédé suivant la revendication 16, dans lequel la phase de réception d'une réponse (132) renferme la phase de réception d'une réponse (132) dans un système dédié.

18. Procédé suivant l'une des revendications précédentes, dans lequel la demande (134) et la réponse (132) sont mémorisées en tant que correspondance (135, 175).

19. Procédé suivant la revendication 18, dans lequel la phase de restitution de la session utilisateur (130, 170) renferme les phases suivantes :
localisation de la session utilisateur (130, 170) ;
récupération de la correspondance mémorisée (135, 175) ;
restitution d'un contenu d'écran (120) généré dynamiquement sur la base de la correspondance récupérée (135, 175) ; et
affichage du contenu d'écran (120) généré dynamiquement, restitué.

20. Procédé suivant la revendication 19, dans lequel la phase de restitution d'un contenu d'écran (120) généré dynamiquement renferme les phases suivantes :
analyse de facteurs d'environnement, liés au client (110) et au serveur (140) ;
élaboration du contenu d'écran (120) généré dynamiquement à partir de la correspondance récupérée (135, 175) ;
affichage des facteurs d'environnement analysés ; et
affichage du contenu d'écran (120) généré dynamiquement élaboré.

21. Procédé suivant la revendication 19, qui renferme en outre la phase d'actualisation du contenu d'écran (120) généré dynamiquement élaboré, sur la base d'une demande (134) suivante du client.

22. Procédé suivant l'une des revendications précédentes, dans lequel la phase de mémorisation renferme les phases suivantes :
mémorisation de la demande (134) et de la réponse (132) dans une mémoire temporaire ;
détermination si un événement significatif a eu lieu ; et
inscription de la demande (134) et de la réponse (132) dans la mémoire temporaire, si l'événement significatif a eu lieu.

23. Procédé suivant la revendication 22, dans lequel l'événement significatif étant un événement de conclusion d'une affaire.

24. Système de restitution visuelle d'une session utilisateur (130, 170) dans un environnement informatique en ligne, qui présente un client (110) et un serveur (140), comprenant :
une liaison de transmission de données (125) entre le client (110) et le serveur (140) ;
une mémoire de contrôle (160) ; et
un filtre de saisie de données de contrôle (125), qui saisit une demande (134) du client (110) au serveur (140) et des données correspondant à l'environnement client-serveur, qui mémorise la demande (134) et des données correspondant à l'environnement client-serveur dans la mémoire de contrôle (160), qui détermine et saisit une réponse (132) envoyée par le serveur (140) au client (110), correspondant à la demande (134) et à des données correspondant à l'environnement client-serveur, et qui mémorise la réponse (132) et des données correspondant à l'environnement client-serveur dans la mémoire de contrôle (160), la demande (134) mémorisée et la réponse (132) mémorisée étant utilisées pour la restitution visuelle de la session utilisateur (130, 170), et la demande (134) se rapportant à une demande dans un environnement client-serveur sur base Internet.

25. Support de données lisible par ordinateur, sur lequel est mémorisé un nombre d'instructions qui, lors de leur exécution par un processeur, amènent le processeur à mettre en ouvre un procédé suivant l'une des revendications 1 à 23.
